# EUROPEAN PATENT APPLICATION

(11) **EP 4 309 771 A1**
(43) Date of publication of application: **24.01.2024**
(21) Application number: 23186024.8
(22) Date of filing: 18.07.2023
(51) Int. Cl.: B01D 67/00, B01D 71/68

(54) **METHOD FOR PRODUCING ASYMMETRIC POROUS MEMBRANE**

(30) Priority: 19.07.2022 TW 111127028
(71) Applicant: Hantech Co., Ltd., Taipei City 114 (TW)
(72) Inventor: Hsu, Hsin-Ling, 350 Zhunan Township, Miaoli County (TW); Huang, Yen-Po, 302 Zhubei City, Hsinchu County (TW)
(74) Representative: Cohausz & Florack

(57) **Abstract**

A method for producing an asymmetric porous membrane includes: forming a first casting film from a casting solution on a carrier, the casting solution containing a hydrophobic polymer, a hydrophilic polymer, a water-soluble polymer, and a solvent; placing the first casting film in an environment containing water vapor to contact the first casting layer with the water vapor, thereby obtaining a second casting film, the environment having a temperature ranging from 20°C to 33°C and a relative humidity of 30% to 80%; and contacting the second casting film with a coagulating agent so as to perform a wet-phase inversion. The hydrophilic polymer is polyvinylpyrrolidone, polyalkylene glycol, or a combination thereof. The water-soluble polymer is a copolymer of vinylpyrrolidone and vinyl acetate, a copolymer of vinylpyrrolidone and alkylene glycol, a vinyl alcohol-based polymer, an ethylene glycol/propylene glycol based copolymer, an ethyleneimine-based polymer, a water-soluble cellulose, or combinations thereof.

## Description

The disclosure relates to a method for producing a membrane, and more particularly to a method for producing an asymmetric porous membrane.

US 8,727,136 B2 discloses a method for producing an integrally asymmetric membrane that includes steps (a) to (h) as follows.

In step (a), a homogeneous casting solution is produced by mixing a polymer component and a solvent system. The polymer component includes a hydrophobic first polymer present in an amount ranging from 10 wt% to 25 wt% based on 100 wt% of the homogeneous casting solution, a hydrophilic second polymer present in an amount ranging from 2 wt% to 20 wt% based on 100 wt% of the homogenous casting solution, and a hydrophilic third polymer, which is different from the hydrophilic second polymer and present in an amount ranging from 0.2 wt% to 20 wt% based on 100 wt% of the homogenous casting solution. The hydrophilic third polymer is a hydrophilically modified aromatic sulfone polymer. After that, in step (b), the homogenous casting solution is conditioned to a molding temperature.

In step (c), the homogeneous casting solution is poured onto a carrier to form a film. The carrier has a temperature that is at least 15°C higher than the molding temperature. In step (d), the film located on the carrier is conveyed through a climate-controlled zone having a temperature ranging from 35°C to 55°C with a relative humidity ranging from 40% to 75%. In step (e), the film located on the carrier is introduced into a coagulation medium to initiate coagulation of the film, so as to form a membrane structure. In step (f), the membrane structure is withdrawn from the carrier within the coagulation medium. In step (g), the membrane structure is stabilized in the coagulation medium, so as to obtain a resulting membrane. In step (h), the resulting membrane is extracted and dried.

Although the method in US 8,727,136 B2 may produce the integrally asymmetric membrane having a large pore size on a surface thereof, the temperature adopted in step (d) is higher, which causes high energy consumption and consequently may result in a higher production cost. In view of the foregoing, developing a method for producing an asymmetric porous membrane for filtration, which has lower energy consumption and lower production cost, is the aim of those skilled in the art.

Therefore, an object of the disclosure is to provide a method for producing an asymmetric porous membrane that can alleviate at least one of the drawbacks of the prior art.

According to an aspect of the disclosure, there is provided a method for producing an asymmetric porous membrane according to claim 1.

Other features and advantages of the disclosure will become apparent in the following detailed description of the embodiment(s) with reference to the accompanying drawings. It is noted that various features may not be drawn to scale.
FIG 1 is a cross-sectional view illustrating an asymmetric porous membrane of Example 1 according to the disclosure.
FIG. 2 is a cross-sectional view illustrating an asymmetric porous membrane of Example 2 according to the disclosure.
FIG. 3 is a cross-sectional view illustrating an asymmetric porous membrane of Example 3 according to the disclosure.
FIG. 4 is a cross-sectional view illustrating an asymmetric porous membrane of Example 4 according to the disclosure.
FIG. 5 is a cross-sectional view illustrating an asymmetric porous membrane of Example 5 according to the disclosure.
FIG. 6 is a cross-sectional view illustrating an asymmetric porous membrane of Example 6 according to the disclosure.
FIG. 7 is a cross-sectional view illustrating an asymmetric porous membrane of Example 7 according to the disclosure.
FIG. 8 is a cross-sectional view illustrating an asymmetric porous membrane of Example 8 according to the disclosure.
FIG. 9 is a cross-sectional view illustrating an asymmetric porous membrane of Comparative Example 1.
FIG. 10 is a cross-sectional view illustrating an asymmetric porous membrane of Comparative Example 2.

Before the present disclosure is described in greater detail, it should be noted that if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to," and that the word "comprises" has a corresponding meaning.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials describe.

According to the disclosure, a method for producing an asymmetric porous membrane includes: forming a first casting film from a casting solution on a carrier, the casting solution containing a hydrophobic polymer, a hydrophilic polymer, a water-soluble polymer, and a solvent, the hydrophilic polymer being one of polyvinylpyrrolidone, polyalkylene glycol, and a combination thereof, the water-soluble polymer being one of a copolymer of vinylpyrrolidone and vinyl acetate, a copolymer of vinylpyrrolidone and alkylene glycol, a vinyl alcohol-based polymer, an ethylene glycol/propylene glycol based copolymer, an ethylene imine-based polymer, a water soluble cellulose, and combinations thereof; placing the first casting film in an environment containing water vapor to contact the first casting film with the water vapor, thereby obtaining a second casting film, the environment having a temperature ranging from 20°C to 33°C and a relative humidity of 30% to 80%; and contacting the second casting film with a coagulating agent so as to perform a wet-phase inversion.

The method for producing the asymmetric porous membrane according to the disclosure is described in detail below.

### <Hydrophobic polymer>

In certain embodiments, the hydrophobic polymer is present in an amount ranging from 10 wt% to 25 wt% based on 100 wt% of the casting solution. In certain embodiments, the hydrophobic polymer is present in an amount ranging from 10 wt% to 17 wt% based on 100 wt% of the casting solution. The hydrophobic polymer may contain only one kind of hydrophobic polymer or a combination of two or more kinds of hydrophobic polymers. Examples of the hydrophobic polymer may include, but are not limited to, polysulfone (PSF) or poly(vinylidene fluoride). The polysulfone may contain only one kind of polysulfone or a combination of two or more kinds of polysulfones. The polysulfone may include, but is not limited to, poly(arylene ether sulfone). Examples of the poly(arylene ether sulfone) may include, but are not limited to, a bisphenol A polysulfone or a polyethersulfone (PES) formed by polycondensation of bisphenol S and 4,4'-dichlorodiphenyl sulfone.

### <Hydrophilic polymer>

The purpose of use of the hydrophilic polymer is to impart hydrophilicity to the asymmetric porous membrane so as to broaden the application of the asymmetric porous membrane. In certain embodiments, the hydrophilic polymer may be present in an amount ranging from 5 wt% to 30 wt% based on 100 wt% of the casting solution. In certain embodiments, the hydrophilic polymer may be present in an amount ranging from 5 wt% to 22 wt% based on 100 wt% of the casting solution. The polyvinylpyrrolidone may have a K value ranging from 30 to 95, but is not limited thereto. In addition, the polyvinylpyrrolidone may be Luviskol^{®} K-90 manufactured by Badische Anilin- & Soda-Fabrik (BASF), which has a K value ranging from 88 to 96, or may be Luviskol^{®} K-30 manufactured by BASF, which has a K value ranging from 27 to 33, but is not limited thereto. The polyalkylene glycol may be a polyethylene glycol having an average molecular weight ranging from 190 g/mol to 1000 g/mol or a polypropylene glycol having an average molecular weight ranging from 190 g/mol to 1000 g/mol, but is not limited thereto.

### <Water-soluble polymer>

The alkylene glycol (used for forming the copolymer of vinylpyrrolidone and alkylene glycol) may be ethylene glycol or propylene glycol, but is not limited thereto. The vinyl alcohol-based polymer may be a copolymer of vinyl alcohol and ethyleneimine, a copolymer of vinyl alcohol and alkylene glycol, a copolymer of vinyl alcohol and vinylpyrrolidone, or a polyvinyl alcohol, but is not limited thereto. In addition, the alkylene glycol (used for forming the copolymer of vinyl alcohol and alkylene glycol) may be ethylene glycol or propylene glycol, but is not limited thereto. The ethylene glycol/propylene glycol based copolymer may be Pluronic^{®} F-127 (i.e., Poloxamer407) manufactured by BASF, or Pluronic^{®} RPE 1740 manufactured by BASF, but is not limited thereto. The ethyleneimine-based polymer may be a copolymer of ethyleneimine and alkylene glycol, a copolymer of ethyleneimine and vinylpyrrolidone, but is not limited thereto. The alkylene glycol (used for forming the copolymer of ethyleneimine and alkylene glycol) may be ethylene glycol or propylene glycol, but is not limited thereto. The copolymer of ethyleneimine and alkylene glycol may be Lupasol^{®} PN 80 manufactured by BASF, which is a copolymer of ethyleneimine, ethylene glycol and propylene glycol, or Sokalan^{®} HP 20 manufactured by BASF, which is a copolymer of ethyleneimine and ethylene glycol, but is not limited thereto. The water-soluble cellulose may be a hydroxyethyl cellulose, but is not limited thereto. In some embodiments, the water-soluble polymer may be present in an amount ranging from 0.5 wt% to 20 wt% based on 100 wt% of the casting solution. In still some embodiments, the water-soluble polymer may be present in an amount ranging from 0.5 wt% to 5 wt% based on 100 wt% of the casting solution.

### <Solvent>

The purpose of use of the solvent is to dissolve the hydrophobic polymer, the hydrophilic polymer, and the water-soluble polymer. The solvent may contain only one kind of solvent or a combination of two or more kinds of solvents. Examples of the solvent may include, but are not limited to, dimethylacetamide, caprolactam, butyrolactone, N-methylpyrrolidone, dimethylsulfoxide, tetrahydrofuran, or acetone.

The process for preparation of the casting solution is not particularly restricted. For example, the casting solution may be prepared by mixing the solvent and the hydrophobic polymer to form a first solution, followed by mixing the first solution, the hydrophilic polymer, and the water-soluble polymer. In certain embodiments, mixing the solvent and the hydrophobic polymer may be conducted under a temperature ranging from 40°C to 50°C for a time period ranging from 3 hours to 5 hours. In certain embodiments, mixing the first solution, the hydrophilic polymer and the water-soluble polymer may be conducted by mixing the first solution and the water-soluble polymer so as to obtain a mixture, followed by mixing the mixture and the hydrophilic polymer. In certain embodiments, mixing the first solution and the water-soluble polymer is conducted under a temperature ranging from 70°C to 80°C for a time period ranging from 3 hours to 5 hours. In certain embodiments, mixing the mixture and the hydrophilic polymer is conducted under a temperature ranging from 50°C to 60°C for a time period ranging from 1 hour to 3 hours.

The carrier in not particularly restricted as long as it is capable of carrying the casting solution thereon. Examples of the carrier may include, but are not limited to, a glass substrate, a polyethylene terephthalate substrate, or a stainless steel substrate. In some embodiments, the casting solution has a first temperature and the carrier has a second temperature, and the first temperature and the second temperature may have a difference equal to or smaller than 15°C. In other embodiments, the first temperature may range from 20°C to 45°C. In other embodiments, the second temperature may range from 20°C to 45°C. In some embodiments, the first casting film has a thickness ranging from 0.1 mm to 0.5 mm.

In certain embodiments, the environment containing the water vapor has a temperature ranging from 20°C to 33°C and a relative humidity of 70% to 80%. In certain embodiments, a contacting time of the first casting film and the water vapor ranges from 0.1 seconds to 60 seconds.

The manner of contacting the second casting film with the coagulating agent is not particularly limited, and may be carried out by a conventional manner. For instance, the contacting may be performed by immersing the second casting film in a coagulating solution containing the coagulating agent. Moreover, in the wet-phase inversion, a diffusion exchange occurs between the solvent, which is now contained by the second casting film, and the coagulating agent. The coagulating agent may be, for example, a reagent that does not dissolve the hydrophobic polymer. In certain embodiments, the coagulating agent may be one of water and an alcohol. In some embodiments, the wet-phase inversion may be carried out under a temperature ranging from 22°C to 70°C. In still some embodiments, the wet-phase inversion may be carried out for a time period ranging from 0.5 hours to 2 hours. In other embodiments, the coagulating solution may further contain a solvent capable of dissolving the hydrophobic polymer, and the solvent may be present in an amount of equal to or less than 30 wt% based on 100 wt% of the coagulating solution.

The method for producing the asymmetric porous membrane according to the disclosure may further include a detaching treatment following the wet-phase inversion. In the detaching treatment, a coagulating film, which is obtained after completion of the wet-phase inversion and has asymmetric pores thereon, is detached from the carrier. In certain embodiments, the detaching treatment may be carried out by hand or by using a mechanical implement. In certain embodiments, by regulating the amount of each material component (i.e., the hydrophobic polymer, the hydrophilic polymer, the water-soluble polymer, or the solvent) in the casting solution and by adjusting the conditions under which the wet-phase inversion is conducted, the adhesion between the coagulating film and the carrier may be weakened so that the coagulating film may be easily or naturally detached.

The method for producing the asymmetric porous membrane according to the disclosure may yet include a drying treatment following the detaching treatment. In the drying treatment, residual water, the remaining of the coagulating agent, and/or the solvent in the coagulating film may be removed. In certain embodiments, the drying treatment may be an air drying treatment. In some embodiments, the drying treatment may be conducted under a temperature ranging from 80°C to 100°C. In some embodiments, the drying treatment may be conducted for a time period ranging from 2 hours to 4 hours.

The asymmetric porous membrane thus obtained by the method according to the disclosure has a first surface portion having a plurality of first filtration pores, a second surface portion having a plurality of second filtration pores and disposed oppositely to the first surface portion, and a middle portion having a plurality of third filtration pores and disposed between the first surface portion and the second surface portion. The first filtration pores have a first pore size, the second filtration pores have a second pore size, and the third filtration pores have a third pore size. The first pore size and the second pore size are greater than the third pore size. Moreover, the first pore size is greater than the second pore size.

In some embodiments, the first pore size ranges from 0.1 µm to 5 µm. In some embodiments, the second pore size ranges from 2 µm to 10 µm. In some embodiments, the third pore size ranges from 0.01 µm to 2 µm.

The disclosure will be further described by way of the following examples. However, it should be understood that the following examples are indented solely for the purpose of illustration and should not be construed as limiting the present disclosure in practice.

### EXAMPLES

### Production of Asymmetric Porous Membrane

### Example 1

5 g of dimethylsulfoxide, 30 g of caprolactam, and 30 g of butyrolactone were mixed (these three serving as a solvent), and then 14 g of polyethersulfone (Ultrason^{®} E6020P, manufactured by BASF, weight average molecular weight: 72000 g/mol; serving as a hydrophobic polymer) was added therein, so as to form a mixture, followed by stirring the mixture at 50°C for 5 hours to dissolve the polyethersulfone, thereby forming a first solution that is homogeneous.

6 g of polyvinylpyrrolidone (Luviskol^{®} K-90, manufactured by BASF, serving as a hydrophilic polymer) and 1 g of polyvinyl alcohol (manufactured by Sigma-Aldrich Pty Ltd., weight average molecular weight: 9000-10000 g/mol; degree of alcoholysis: 80 mol%, serving as a water-soluble polymer) were added into the first solution to form a first mixture, followed by stirring the first mixture for 5 hours at 80°C and subsequently cooling down the first mixture to 60°C. Next, 12 g of polyethylene glycol 200 (PEG 200, manufactured by Sigma-Aldrich Pty Ltd., weight average molecular weight: 190-210 g/mol, serving as a hydrophilic polymer) was added into the first mixture, following by stirring for 3 hours and then cooling down to 40°C, so as to form a second solution that is homogeneous and has a rotational viscosity of 10700 cps at 25°C. The second solution was then subjected to a degassing treatment, thereby obtaining a casting solution that is homogeneous.

60 g of the casting solution having a temperature of 40°C was coated on a glass substrate (serving as a carrier) having a temperature of 45°C using a coating apparatus including a blade, so as to form a coating film having a thickness of 0.25 mm, and then the coating film was left standing on the glass substrate for a period of time, thereby forming a first casting film. The first casting film and the glass substrate cooperatively formed a first laminate. The blade and the glass substrate have a distance of 250 µm.

The first laminate was then placed in an environment containing water vapor to contact the first casting film of the first laminate with the water vapor, so as to convert the first casing film into a second casting film. The second casting film and the glass substrate cooperatively formed a second laminate. Specifically, the environment has a temperature of 33°C and a relative humidity of 70%. In addition, a contacting time of the first casting film and the water vapor is 5 seconds.

Subsequently, the second laminate was immersed in water (serving as a coagulating agent) at 60°C for 2 hours, so as to allow a wet-phase inversion to proceed, so that the second casting film was coagulated and converted into a coagulating film having asymmetric pores, thereby obtaining a third laminate containing the coagulating film and the glass substrate.

The coagulating film having the asymmetric pores was then peeled by hand from the glass substrate.

Finally, the coagulating film having the asymmetric pores was placed in a hot air oven at 85°C for 2 hours, thereby obtaining an asymmetric porous membrane having a thickness of 0.12 mm.

### Examples 2 to 8 and Comparative Examples 1 and 2

The procedures for producing the asymmetric porous membrane in each of Examples 2 to 8 and Comparative Examples 1 and 2 were similar to those of Example 1, except that the type and the amount of material components in the casting solution, the coating condition (e.g., the temperature of the glass substrate) at which the casting solution was coated on the glass substrate, the temperature and the relative humidity of the environment, and the contacting time of the first casting film and the water vapor were varied (see Tables 1 and 2 below).

In Example 2, a polysulfone (Udel^{®} P-3500 LCD MB7, manufactured by Solvay, weight average molecular weight: 77000-83000 g/mol) was used to serve as the hydrophobic polymer. In each of Example 7 and Comparative Examples 1 and 2, the polyvinylpyrrolidone used was Luviskol^{®} K-30 manufactured by BASF, while the polyvinylpyrrolidone used in each of the other examples was Luviskol^{®} K-90 manufactured by BASF as that used in Example 1. In each of Examples 2 and 3, an ethylene glycol/propylene glycol based copolymer (serving as the water-soluble polymer) used was Pluronic^{®} F-127 manufactured by BASF. In Example 5, the ethylene glycol/propylene glycol based copolymer used was Pluronic^{®} RPE 1740 manufactured by BASF. In Example 6, a copolymer of ethyleneimine and alkylene glycol (serving as the water-soluble polymer) used was Sokalan^{®} HP 20 manufactured by BASF, which is a copolymer of ethyleneimine and ethylene glycol. In Example 8, the copolymer of ethyleneimine and alkylene glycol used was Lupasol^{®} PN 80 manufactured by BASF, which is a copolymer of ethyleneimine, ethylene glycol, and propylene glycol.

### Property Evaluation

### Structural analysis

The asymmetric porous membrane in each of Examples 1 to 8 and Comparative Examples 1 and 2 was subjected to observation using a desktop scanning electron microscope (SEM) (Thermo Fisher Scientific; Model No.: ProX°), and thus a thickness thereof was determined.

### Determination of mean flow pore size

The asymmetric porous membrane in each of Examples 1 to 8 and Comparative Examples 1 and 2 was cut into a circular disc with a diameter of 4.7 cm to serve as a test sample. Next, each of the test samples was subjected to a measurement using a capillary flow porometer (PMI; Model No.: CFP-1200-A) by which a gradually increasing gas pressure was applied on the test samples (i.e., an air-permeability method), so as to obtain a curve graph illustrating the relationship between the gas pressure (psi) and the flow rate (mL/min), thereby determining the mean flow pore size (µm) as well as the first bubble point pressure (psi).

### Measurement of water flux

The asymmetric porous membrane in each of Examples 1 to 8 and Comparative Examples 1 and 2 was cut into a circular disc with a diameter of 4.7 cm to serve as a test sample. Afterward, each test sample was placed in a measuring equipment under a condition having a negative pressure of 93 kPa. The measuring equipment included a detection device and a vacuum pump connected to the detection device. In addition, the detection device included a water inlet for entry of water thereinto, an accommodation space communicating with the water inlet, and a water outlet for flowing out of the water that had been passing through the accommodation space. Specifically, the test sample was disposed in the accommodation space to divide the accommodation space into a first space portion that communicated with the water inlet and a second space portion that communicated with the water outlet.

### Measurement of rotational viscosity

The second solution in each of Examples 1, 2 and 6, and Comparative Example 2 was subjected to a rotational viscosity measurement using a rotational viscometer (Brookfield; Model No.: DV2TRV) under a condition of 25°C.

**Table 1**

| | | | | Example | | | | |
|---|---|---|---|---|---|---|---|---|
| | | | | 1 | 2 | 3 | 4 | 5 |
| Casting solution | Hydrophobic polymer (g) | | Polyethersulfone | 14 | 0 | 11 | 12 | 14 |
| | | | Polysulfone | 0 | 14 | 0 | 0 | 0 |
| | Hydrophilic Polymer (g) | | Polyvinylpyrrolidone | 6 | 6 | 6 | 6 | 6 |
| | | | Polyethylene glycol 200 | 12 | 12 | 15 | 14 | 12 |
| | Water-soluble polymer (g) | | Polyvinyl alcohol | 1 | 0 | 0 | 0 | 0 |
| | | | Ethylene glycol/propylene glycol based copolymer | 0 | 4 | 4 | 0 | 3 |
| | | | Copolymer of ethyleneimine and alkylene glycol | 0 | 0 | 0 | 0 | 0 |
| | | | Hydroxyethyl cellulose | 0 | 0 | 0 | 1 | 0 |
| | Solvent (g) | | Caprolactam | 30 | 0 | 32 | 32 | 28 |
| | | | Butyrolactone | 30 | 0 | 16 | 20 | 36 |
| | | | N-methylpyrrolidone | 0 | 68 | 16 | 0 | 0 |
| | | | Dimethylsulfoxide | 5 | 0 | 0 | 5 | 0 |
| | Rotational viscosity of second solution (cps) | | | 10700 | 9300 | - | - | - |
| | Amount coated on a glass substrate (g) | | | 60 | 60 | 60 | 60 | 60 |
| | Temperature (°C) | | | 40 | 40 | 40 | 40 | 25 |
| Thickness of coating film (mm) | | | | 0.25 | 0.25 | 0.25 | 0.25 | 0.2 |
| Temperature of carrier (°C) | | | | 45 | 25 | 30 | 45 | 25 |
| Environment | | Temperature (°C) | | 33 | 28 | 33 | 30 | 25 |
| | | Relative humidity (%) | | 70 | 75 | 75 | 70 | 70 |
| Contacting time of first casting film and water vapor (sec) | | | | 5 | 10 | 5 | 5 | 5 |
| Wet-phase inversion | | Temperature (°C) | | 60 | 60 | 60 | 60 | 60 |
| | | Coagulating agent | | water | water | water | water | water |
| | | Time (hour) | | 2 | 2 | 2 | 2 | 2 |
| Air-dried treatment | | Temperature (°C) | | 85 | 85 | 85 | 85 | 85 |
| | | Time (hour) | | 2 | 2 | 2 | 2 | 2 |
| Thickness of asymmetric porous membrane (mm) | | | | 0.12 | 0.11 | 0.10 | 0.18 | 0.10 |
| Property evaluation | Water flux [mL/(min x cm²)] | | | 48 | 130 | 137 | 124 | 55 |
| | First bubble point pressure (psi) | | | 15.72 | 9.35 | 6.42 | 8.91 | 22.44 |
| | Mean flow pore size (µm) | | | 0.25 | 0.43 | 0.55 | 0.51 | 0.19 |

**Table 2**

| | | | | Example | | | Comparative Example | |
|---|---|---|---|---|---|---|---|---|
| | | | | 6 | 7 | 8 | 1 | 2 |
| Casting solution | Hydrophobic polymer (g) | Polyethersulfone | | 14 | 14 | 14 | 14 | 14 |
| | | Polysulfone | | 0 | 0 | 0 | 0 | 0 |
| | Hydrophilic Polymer (g) | Polyvinylpyrrolidone | | 6 | 9 | 9 | 9 | 9 |
| | | Polyethylene glycol 200 | | 12 | 12 | 12 | 12 | 12 |
| | Water-soluble polymer (g) | Polyvinyl alcohol | | 0 | 0 | 0 | 0 | 0 |
| | | Ethylene glycol/propylene glycol based copolymer | | 0 | 3 | 0 | 0 | 0 |
| | | Copolymer of ethyleneimine and alkylene glycol | | 3 | 0 | 3 | 0 | 0 |
| | | Hydroxyethyl cellulose | | 0 | 0 | 0 | 0 | 0 |
| | Solvent (g) | Caprolactam | | 28 | 28 | 28 | 28 | 28 |
| | | | Butyrolactone | 36 | 36 | 36 | 36 | 36 |
| | | | N-methylpyrrolidone | 0 | 0 | 0 | 0 | 0 |
| | | | Dimethylsulfoxide | 0 | 0 | 0 | 0 | 0 |
| | Rotational viscosity of second solution (cps) | | | 9900 | - | - | - | 12200 |
| | Amount (g) | | | 60 | 60 | 60 | 60 | 60 |
| | Temperature (°C) | | | 25 | 25 | 25 | 25 | 40 |
| Thickness of coating film (mm) | | | | 0.2 | 0.2 | 0.2 | 0.2 | 0.2 |
| Temperature of carrier (°C) | | | | 25 | 25 | 25 | 25 | 45 |
| Environment | | Temperature (°C) | | 25 | 22 | 25 | 25 | 41 |
| | | Relative humidity (%) | | 70 | 70 | 70 | 70 | 20 |
| Contacting time of first casting film and water vapor (sec) | | | | 5 | 5 | 5 | 5 | 5 |
| Wet-phase inversion | | | Temperature (°C) | 60 | 60 | 60 | 60 | 60 |
| | | | Coagulating agent | water | water | water | water | water |
| | | | Time (hour) | 2 | 2 | 2 | 2 | 2 |
| Air-dried treatment | | | Temperature (°C) | 85 | 85 | 85 | 85 | 85 |
| | | | Time (hour) | 2 | 2 | 2 | 2 | 2 |
| Thickness of asymmetric porous membrane (mm) | | | | 0.10 | 0.09 | 0.10 | 0.09 | 0.08 |
| Property evaluation | | Water flux [mL/(min x cm²)] | | 53 | 65 | 45 | 11 | 50 |
| | | Bubble point pressure (psi) | | 22.27 | 16.62 | 18.31 | 45.61 | 24.36 |
| | | Mean flow pore size (µm) | | 0.19 | 0.22 | 0.21 | 0.09 | 0.20 |

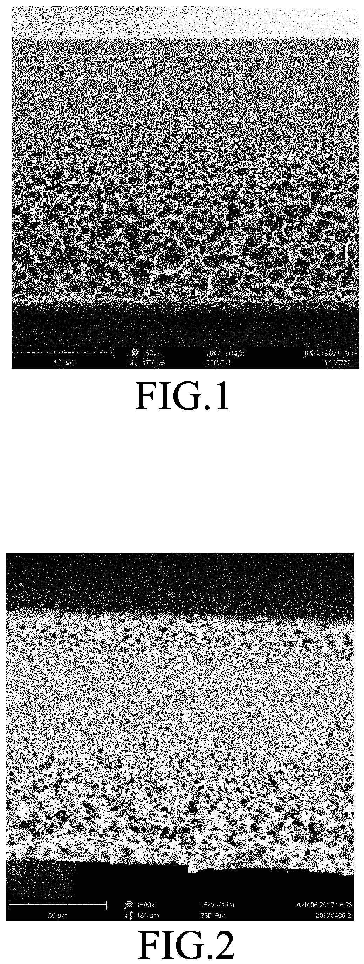

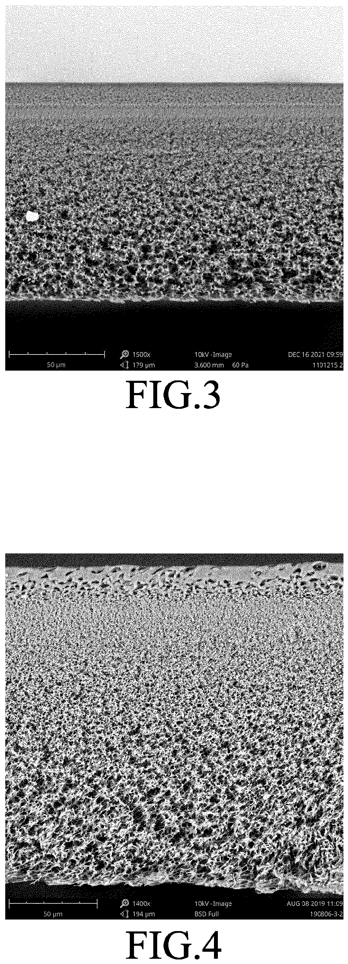

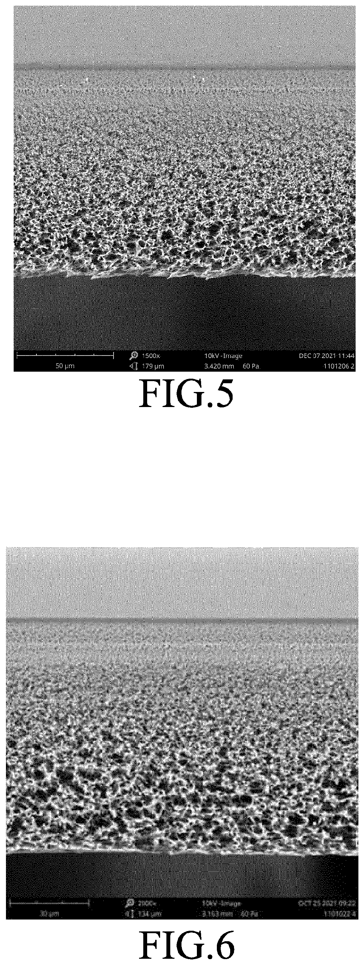

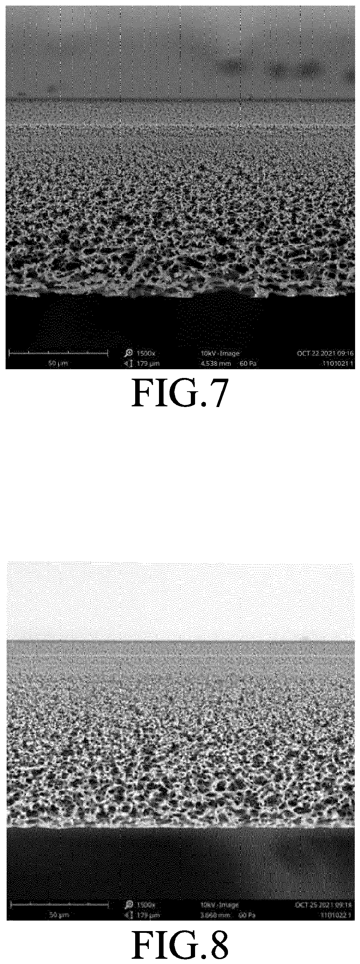

Referring to FIGS. 1 to 8, it can be seen that the method according to the disclosure is truly capable of producing the asymmetric porous membrane by using the casting solution that contains the water-soluble polymer.

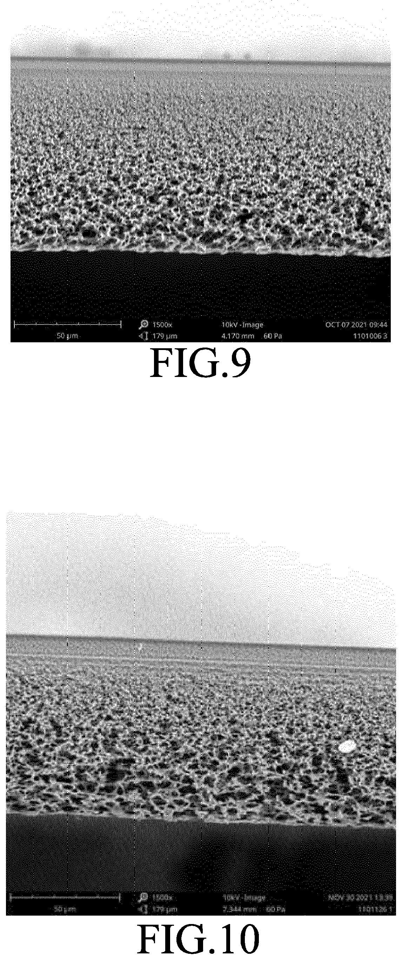

Referring to FIGS. 9 and 10, it can be seen that although, in each of Comparative Examples 1 and 2 (which has no water-soluble polymer utilized in the casting solution), the asymmetric porous membrane can also be obtained, the temperature of the environment should be leveled up from 25°C to 41°C so as to obtain the asymmetric porous membrane having a greater water flux and a larger mean flow pore size (i.e., see Comparative Example 2 in Table 2), indicating that producing the asymmetric porous membrane by using the casting solution without the water-soluble polymer therein may cause a concern of high energy consumption.

In contrast, referring to Tables 1 and 2, by using the casting solution containing the water-soluble polymer to produce the asymmetric porous membrane in each of Examples 1 to 8, the temperature of the environment may be lowered down to a range of merely 20°C to 33°C to desirably obtain the asymmetric porous membrane having a great water flux and a large mean flow pore size, revealing that the method according to the disclosure, which utilizes the water-soluble polymer in the casting solution, may offer an advantage of lower energy consumption compared to Comparative Example 2, in which no water-soluble polymer is contained in the casting solution so that a higher temperature is required in order to achieve a favorable degree of water flux and mean flow pore size.

In summary, through use of the water-soluble polymer which is characterized by its ability to actively absorb the water vapor in the environment, even at a temperature of lower than 35°C, the water vapor is still able to move toward and then diffuse into the first casting film, so as to assist the wet-phase inversion subsequently performed, thereby obtaining the asymmetric porous membrane having a large pore size. Consequently, the method for producing the asymmetric porous membrane according to the disclosure possesses a benefit of low energy consumption compared to a conventional one, which may consume much more energy for making an asymmetric porous membrane with a similar pore size as the one disclosed in US 8,727,136 B2.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for producing an asymmetric porous membrane, **characterized by**:
forming a first casting film from a casting solution on a carrier, the casting solution containing a hydrophobic polymer, a hydrophilic polymer, a water-soluble polymer, and a solvent, the hydrophilic polymer being selected from the group consisting of polyvinylpyrrolidone, polyalkylene glycol, and a combination thereof, the water-soluble polymer being selected from the group consisting of a copolymer of vinylpyrrolidone and vinyl acetate, a copolymer of vinylpyrrolidone and alkylene glycol, a vinyl alcohol-based polymer, an ethylene glycol/propylene glycol based copolymer, an ethyleneimine-based polymer, a water-soluble cellulose, and combinations thereof;
placing the first casting film in an environment containing water vapor to contact the first casting film with the water vapor, thereby obtaining a second casting film, the environment having a temperature ranging from 20°C to 33°C and a relative humidity of 30% to 80%; and
contacting the second casting film with a coagulating agent to perform a wet-phase inversion so as to obtain a coagulating film.

2. The method as claimed in claim 1, wherein the water-soluble polymer is present in an amount ranging from 0.5 wt% to 20 wt% based on 100 wt% of the casting solution.

3. The method as claimed in claim 1 or 2, wherein the hydrophilic polymer is present in an amount ranging from 5 wt% to 30 wt% based on 100 wt% of the casting solution.

4. The method as claimed in any one of claims 1 to 3, wherein the casting solution has a first temperature and the carrier has a second temperature, the first temperature and the second temperature having a difference equal to or smaller than 15°C.

5. The method as claimed in claim 4, wherein the first temperature ranges from 20°C to 45°C.

6. The method as claimed in claim 4 or 5, wherein the second temperature ranges from 20°C to 45°C.

7. The method as claimed in any one of claims 1 to 6, wherein a contacting time of the first casting film and the water vapor ranges from 0.1 seconds to 60 seconds.

8. The method as claimed in any one of claims 1 to 7, wherein the coagulating agent is one of water, alcohol, and a combination thereof.

9. The method as claimed in any one of claims 1 to 8, wherein the hydrophobic polymer is present in an amount ranging from 10 wt% to 25 wt% based on 100 wt% of the casting solution.

10. The method as claimed in any one of claims 1 to 9, wherein the hydrophobic polymer is polysulfone or poly(vinylidene fluoride).

11. The method as claimed in any one of claims 1 to 10, wherein the solvent is one of dimethylacetamide, caprolactam, butyrolactone, N-methylpyrrolidone, dimethylsulfoxide, tetrahydrofuran, acetone, and combinations thereof.

12. The method as claimed in any one of claims 1 to 11, wherein the environment has the relative humidity of 70% to 80%.

13. The method as claimed in any one of claims 1 to 12, further comprising detaching the coagulating film from the carrier.
